# EUROPÄISCHE PATENTSCHRIFT

(11) **EP 2 481 640 B1**
(45) Veröffentlichungstag und Bekanntmachung des Hinweises auf die Patenterteilung: **21.08.2013**
(21) Anmeldenummer: 11010287.8
(22) Anmeldetag: 29.12.2011
(51) Int. Cl.: B60R 13/08, F16B 19/08, F01N 13/18, F02B 77/11

(54) **Hitzeschild**
Heat shield
Bouclier thermique

(30) Priorität: 26.01.2011 DE 202011001963 U
(43) Veröffentlichungstag der Anmeldung: 01.08.2012
(73) Patentinhaber: REINZ-Dichtungs-GmbH, 89233 Neu-Ulm (DE)
(72) Erfinder: Ritzal, Axel, 89233 Neu-Ulm (DE); Schweiggart, Franz, 89284 Pfaffenhofen (DE)
(74) Vertreter: Pfenning, Meinig & Partner GbR

(56) Entgegenhaltungen:
- WO-A1-2006/099913
- WO-A1-2006/128676
- WO-A1-2010/062828
- DE-A1-102004 033 552
- US-A- 5 211 013

## Beschreibung

Die vorliegende Erfindung betrifft ein Hitzeschild, das zur Abschirmung heißer Bereiche, beispielsweise eines Verbrennungsmotors, eingesetzt wird. Derartige Hitzeschilde weisen herkömmlicherweise mindestens eine metallische Blechlage auf. Diese Blechlage verringert die Abstrahlung von Hitze aus einer Wärmequelle von der heißen, dem heißen Bereich zugewandten Seite der Blechlage und deren Übertragung zur kalten, dem heißen Bereich abgewandten Seite der Blechlage. Weiterhin dient ein derartiges Hitzeschild nicht nur der Dämpfung der Übertragung von Wärme von der heißen zur kalten Seite des Hitzeschildes, sondern auch zur Dämpfung der Übertragung von Schwingungen von einer Seite des Hitzeschildes zur anderen Seite.

In weiteren Bauformen weisen derartige Hitzeschilde mindestens zwei Blechlagen auf, die beispielsweise an ihrem Umfangsrand zumindest abschnittsweise miteinander verbunden sind. Eine derartige Verbindung kann beispielsweise durch Umbördeln der einen Lage um den Rand der anderen Lage erfolgen. Die beiden Blechlagen bilden dann ein Gehäuse, in das weitere Zwischenlagen, beispielsweise weichstoffe, Pappen, Faservliese oder auch Glimmer, expandierter Glimmer, Graphit oder geblähter Graphit - jeweils lose oder zum Filet gepresst - eingelagert sein können.

Herkömmlicherweise weisen derartige Hitzeschilde bzw. ihre Blechlagen Bohrungen als Durchgangsöffnungen auf, die durch die mindestens eine metallische Blechlage gehen. In diese Bohrungen können bei der Montage Befestigungsmittel, beispielsweise Schrauben, eingeführt werden, so dass das Hitzeschild beispielsweise an einem Verbrennungsmotor befestigt werden kann.

Bei nichtmetallischen Hitzeschilden wird beispielsweise in der US 5,211,013, die den Oberbegriff des Anspruchs 1 zeigt, ein Hohlniet mit einer nichtmetallischen Distanzscheibe sowie einem profilierten Ansatzstück zu einem Führungselement für Befestigungsmittel kombiniert.

Die Befestigungsmittel werden üblicherweise fest mit dem entsprechenden Bauteil, beispielsweise einem Verbrennungsmotor, verbunden. Sie können daher sowohl Wärme als auch Schwingungen von dem Bauteil zu dem Hitzeschild übertragen. Daher werden im Stand der Technik bereits Entkopplungselemente vorgesehen, die das Befestigungsmittel von dem Hitzeschild bezüglich der Wärmeübertragung und der Schwingungsübertragung soweit möglich entkoppeln. Als solche Entkopplungselemente werden Kombinationen aus Hülsen und Drahtgestricken oder dergleichen verwendet. Die Hülsen dienen dabei als Abstandshalter bei der Montage des Hitzeschildes mit Spiel zum Befestigungselement, während die Drahtgestricke oder dergleichen insbesondere als schwingungsdämpfendes Material wirken.

Als Alternative zu Drahtgestricken werden in der DE 10 2004 033 552 A1 Schraubfedern verwendet. Die WO 2006/128676 A1 offenbart mehrlagige Tellerfedern, die jeweils paarweise beidseitig des Hitzeschilds mittels eines mehrteiligen Hülsensystems angebracht werden.

Nachteilig daran ist, dass derartige Entkopplungselemente aufwändig zu montieren sind. Oftmals ist es erforderlich, neben dem Hitzeschild und dem Befestigungsmittel auch noch das Entkopplungselement zu bevorraten und dem Werker für die Montage separat zur Verfügung zu stellen.

Die Montage derartiger Entkopplungselemente stellt dabei für den Werker eine zusätzliche Komplikation dar.

Aufgabe der vorliegenden Erfindung ist es daher, ein Hitzeschild zur Verfügung zu stellen, das ein einfach zu montierendes Entkopplungselement aufweist, welches das Hitzeschild insbesondere thermisch, aber auch schwingungstechnisch isoliert. Wesentlich für die vorliegende Erfindung ist weiterhin die Dauerhaltbarkeit des Hitzeschildes und seine Wirtschaftlichkeit.

Diese Aufgabe wird durch das Hitzeschild nach Anspruch 1 gelöst. Vorteilhafte Weiterbildungen des erfindungsgemäßen Hitzeschildes werden in den abhängigen Ansprüchen gegeben.

Das erfindungsgemäße Hitzeschild eignet sich insbesondere zur Verwendung an Verbrennungsmotoren oder deren Nebenaggregaten. Insbesondere Hitzeschilde aus Leichtmetall, wie beispielsweise Aluminium, die gegenüber Hitzeschilden aus Stahl weniger robust gegenüber hohen Temperaturen sind, können vorteilhaft gemäß der vorliegenden Erfindung ausgestaltet sein.

Das erfindungsgemäße Hitzeschild kann schnell und einfach montiert werden. Dadurch werden auch die Montagekosten in einem wirtschaftlichen Rahmen gehalten. Je nach Anwendungsfall kann zwischen Ausführungsbeispielen gewählt werden, bei denen auch das Befestigungselement bereits am Hitzeschild vormontiert ist oder bei denen das Befestigungselement bei der Montage des Hitzeschilds einzusetzen ist. Das erfindungsgemäße Hitzeschild ermöglicht es im Falle vormontierter Befestigungselemente insbesondere, Hitzeschilde mit kurzen Taktzeiten ohne Fügen eines weiteren Elementes oder Umformen oder Anstellen von einzelnen Bereichen zu montieren.

Das erfindungsgemäße Hitzeschild weist mindestens eine metallische Blechlage auf, die eine Durchgangsöffnung zur Aufnahme eines Befestigungsmittels besitzt. In diese Durchgangsöffnung ist erfindungsgemäß ein Hohlniet als Entkopplungselement eingebracht, dessen Setzkopf und Schließkopf jeweils von einer Seite der mindestens einen metallischen Blechlage her auf dem Hitzeschild aufliegt und das Hitzeschild ausgehend von der Durchgangsöffnung hintergreift. Der erfindungsgemäße Hohlniet befindet sich also im Formschluss mit dem Hitzeschild.

Ein derartiger Hohlniet, der vorteilhafterweise als Blindniet ausgeführt sein kann, besitzt seinerseits eine Durchgangsöffnung, durch die das Befestigungsmittel hindurch geführt werden kann, um das Hitzeschild an einem weiteren Bauteil, beispielsweise einem Verbrennungsmotor oder dessen Nebenaggregaten, zu befestigen.

Ist der Hohlniet als Blindniet ausgeführt, so kann der Blindniet von einer Seite des Hitzeschildes in der Durchgangsöffnung montiert werden. Ein aufwändiges Zuführen von Teilen auf beiden Seiten des Hitzeschildes ist somit nicht notwendig. Ebenso müssen bei der Montage des Hitzeschildes auf einem Bauteil keine weiteren Teile zwischen Hitzeschild und Bauteil dazwischengefasst werden.

Der erfindungsgemäße Hohlniet wirkt nun insbesondere als thermisches Entkopplungselement zwischen dem Befestigungsmittel, beispielsweise einer Schraube, und den von ihm durchgriffenen Blechlagen. Dadurch wird im installierten Zustand die Wärmeübertragung vom heißen Bauteil auf die Blechlagen des Hitzeschilds reduziert, was insbesondere für Leichtmetallbleche vorteilhaft ist.

Vorteilhafterweise besitzt der Nietschaft zwei oder mehr in Richtung des Nietschafts verlaufende Schlitze, so dass beim Zusammenpressen des Niets die Seitenwände des Nietschaftes nach außen verpresst werden und Laschen bilden, die formschlüssig an einer der Seiten des Hitzeschildes anliegen und den Schließkopf bilden.

Nach der Montage des Hohlniets wird das Befestigungsmittel in die Durchgangsöffnung des Hohlniets eingeführt und dann anschließend an dem benachbarten Bauteil befestigt. Beispielsweise kann eine Schraube durch die Durchgangsöffnung des Hohlniets geführt werden, so dass der Schraubenkopf auf dem Setzkopf oder dem Schließkopf des Niets aufliegt. In dem benachbarten Bauteil kann eine Gewindebohrung vorgesehen sein, in die die Schraube eingedreht wird. Die Erfindung umfasst dabei zwei alternative Ausführungsformen: Entweder wird das Befestigungsmittel nach Montage des Hohlniets noch beim Hersteller des Hitzeschilds vorzugsweise verliersicher montiert oder das Befestigungsmittel wird erst unmittelbar vor der Befestigung des Hitzeschilds am benachbarten Bauteil eingefügt. Bei der letztgenannten Ausführungsform können sowohl Schrauben als auch Bolzen wie schon im Stand der Technik bekannt als Befestigungsmittel verwendet werden.

Die Durchgangsöffnung des Hohlniets weist vorteilhafterweise kein eigenes Innengewinde auf.

Die Schraube kann in besonders vorteilhafter Weise in der Durchgangsöffnung des Hohlniets verliersicher, jedoch beweglich angeordnet sein. Dadurch ist es nicht mehr erforderlich, das Befestigungsmittel dem für die Montage zuständigen Werker getrennt zur Verfügung zu stellen. Weiterhin wird der Werker entlastet, da das Befestigungsmittel bereits zusammen mit dem Hitzeschild und dem Entkopplungselement zur Verfügung gestellt wird und in leichter Weise auf einem Bauteil montiert werden kann. Eine derartige Ausgestaltung vermeidet auch eine aufwändige getrennte Lagerhaltung und Disposition und damit auch das Risiko, dass bei der Montage ein falsches Befestigungsmittel verwendet wird.

Als verliersicher angeordnete Befestigungsmittel werden vorzugsweise Schrauben eingesetzt. Im Falle einer Schraube als Befestigungsmittel ist diese in der Durchgangsöffnung des Hohlniets zumindest drehbar gelagert. Vorteilhaft ist es, wenn die Schraube zusätzlich in Durchgangsrichtung der Durchgangsöffnung beweglich ist. Im Falle beispielsweise einer Schraube kann der Werker bei der Montage das erfindungsgemäße Hitzeschild an dem Bauelement ansetzen, wobei die Schraube nicht vorn übersteht und auch nicht hinten herausfallen kann, und anschließend unmittelbar die Schraube in eine entsprechende Gewindebohrung im Bauelement eindrehen.

Eine Schraube kann erfindungsgemäß in der Durchgangsöffnung des Hohlniets dadurch beweglich, jedoch verliersicher angeordnet sein, dass die Schraube einen Schaft aufweist, der zwischen Schraubenkopf und Schraubengewinde einen geringeren Durchmesser aufweist als der benachbarte Schraubenkopf und das benachbarte Schraubengewinde. Ist dieser verjüngte Bereich in eine entsprechend enge Durchgangsöffnung des Hitzeschildes bzw. des Hohlniets eingesetzt, so kann die Schraube nicht aus der Durchgangsöffnung gelöst werden. Hier wird die Schraube vor dem Zusammenpressen des Niets, d.h. vor Ausformung der Laschen eingeführt.

In einer anderen vorteilhaften Ausführungsform ist die Schraube als abgesetzter Gewindebolzen ausgeführt, d.h. als Gewindebolzen mit zwei Bereichen unterschiedlichen Gewindedurchmessers und wird erst nach Durchführen des Gewindebolzens durch das Hitzeschild mit einem Schraubenkopf versehen, beispielsweise verschraubt.

Vorteilhafterweise ist das verliersicher angeordnete Befestigungsmittel, beispielsweise die Schraube in Richtung ihres Schraubenkopfes, vorgespannt, beispielsweise auf einer Feder gelagert. Dadurch wird die Schraube innerhalb der Durchgangsöffnung zurückgedrückt, so dass bei geeigneter Wahl der Länge des Schraubenschaftes der Schraubenschaft auf der dem Bauteil zugewandten Seite des Hitzeschildes nicht über die Durchgangsöffnung vorsteht. Dadurch wird vermieden, dass bei der Montage die Schraube auf der Bauteilseite übersteht und die exakte Positionierung des Hitzeschildes behindern kann. Anschließend kann dann die Schraube gegen die Vorspannung in eine dazugehörige Gewindebohrung am Bauteil eingedreht werden. Dies ist besonders vorteilhaft bei ebener oder nach unten gerichteter Montage, wenn ohne solche Federn die Schwerkraft die Schraube in Richtung des Bauteils bewegen würde.

Eine derartige Feder gibt eine weitere Möglichkeit, um die Schraube drehbar, jedoch verliersicher in der Durchgangsbohrung zu befestigen. Dazu kann die Feder form- oder stoffschlüssig sowohl mit dem Schraubenkopf als auch mit der Durchgangsbohrung bzw. dem Hohlniet verbunden werden. Die Feder drückt dann den Schraubenkopf und damit die gesamte Schraube von der Blechlage des Hitzeschildes weg, verhindert jedoch, dass die Schraube aus der Durchgangsbohrung fällt.

Reicht die Schwingungs-Entkopplungswirkung des erfindungsgemäßen Blindniet-Entkopplungselements nicht aus, ist es möglich, dieses mit einem Drahtkissen zu kombinieren, ohne dass ein Zuführen von beiden Seiten des Hitzeschilds notwendig wäre. Hierzu wird auf den Blindniet vor Einführen in die Durchgangsöffnung des Hitzeschilds ein Drahtkissen aufgeschoben. Vor oder beim Einführen des Nietschafts in die Durchgangsöffnung wird das Drahtkissen dann bis zum Setzkopf geschoben.

Bei einem zweilagigen oder mehrlagigen Hitzeschild ist es vorteilhaft, wenn die Durchgangsöffnung in den Blechlagen in einem Bereich angeordnet ist, in dem zwischen den zwei Blechlagen des Gehäuses keine weitere Zwischenlage angeordnet ist. Dies gilt insbesondere für Zwischenlagen mit stark ausgeprägtem Setzverhalten. Dadurch lässt sich ein guter Kraftschluss zwischen dem Befestigungsmittel und dem Bauteil, an dem das Hitzeschild befestigt wird, herstellen.

Das erfindungsgemäße Hitzeschild kann jede beliebige Form aufweisen. Vorteilhafterweise besitzt es jedoch eine flache Grundgestalt. Die Blechlage oder der Blechlagenverbund ist wesentlich dünner als die flächige Ausdehnung des Hitzeschilds. Diese flache Grundgestalt ist üblicherweise dreidimensional verformt.

Im Folgenden werden einige Beispiele erfindungsgemäßer Hitzeschilde gegeben. Dabei stellen auch einzelne für ein jeweiliges Beispiel beschriebene Elemente jeweils auch einzeln Elemente der vorliegenden Erfindung dar und sind nicht lediglich im Gesamtzusammenhang der folgenden beispielhaften Darstellung zu betrachten.

Es zeigen
- Figur 1: ein Hohlniet im unverpressten Zustand;
- Figur 2: einen Ausschnitt aus einem Hitzeschild mit verpresstem Hohlniet gemäß Figur 1;
- Figur 3: eine Aufsicht auf eine Seite des Hitzeschildes gemäß Figur 2;
- Figur 4: eine Aufsicht auf ein weiteres Hitzeschild;
- Figur 5: eine Ansicht eines Ausschnitts eines erfindungsgemäßen Hitzeschildes;
- Figur 6: einen Querschnitt durch ein weiteres Hitzeschild;
- Figur 7: einen Querschnitt aus einem weiteren Hitzeschild;
- Figur 8: eine Aufsicht auf ein Hitzeschild nach Figur 7;

- Figur 9: eine Aufsicht auf ein weiteres Hitzeschild; und
- Figur 10: einen Ausschnitt aus einem erfindungsgemäßen Hitzeschild mit verpresstem Hohlniet in Variation der Figur 2.

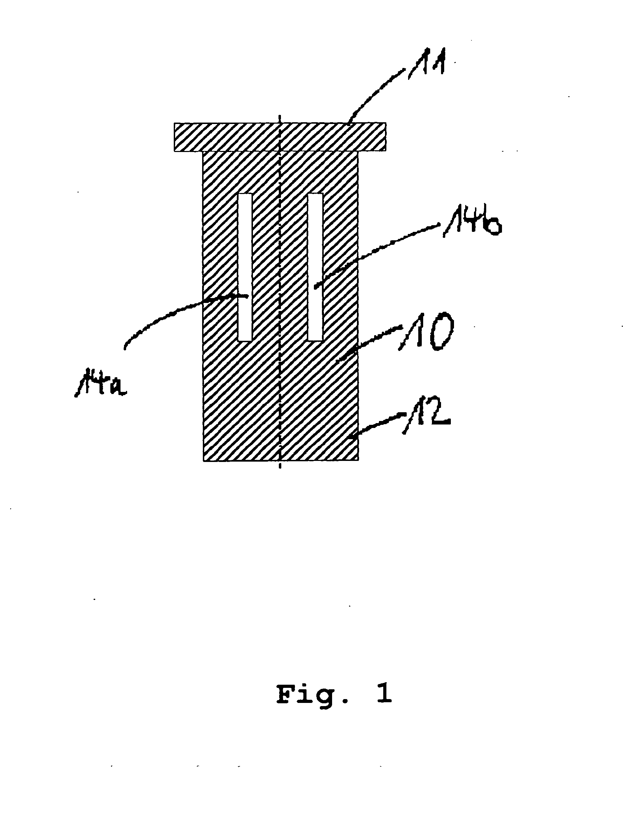

Figur 1 zeigt ein Hohlniet, wie er bei der vorliegenden Erfindung eingesetzt werden kann. Der Hohlniet 10 weist einen Setzkopf 11 und einen Nietschaft 12 auf. Der Nietschaft 12 besitzt in Längsrichtung insgesamt vier Längsschlitze, von denen in der Aufsicht der Figur 1 lediglich zwei Längsschlitze 14a und 14b dargestellt sind.

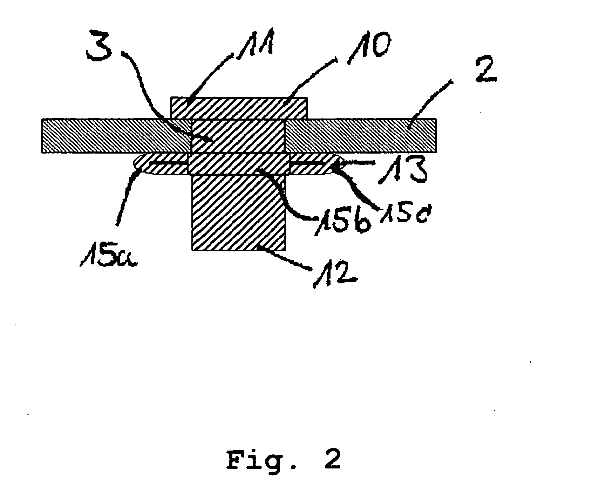

Figur 2 zeigt ein erfindungsgemäßes Hitzeschild 1 in Aufsicht auf den Hohlniet 10 und im Querschnitt der Blechlage 2. Dieses Hitzeschild 1 weist eine Blechlage 2 auf mit einer Durchgangsöffnung 3 für ein Befestigungsmittel. In diese Durchgangsöffnung 3 ist nun ein Hohlniet 10, wie in Figur 1 dargestellt, eingesetzt. Der Nietschaft 12 ist in Figur 2 verpresst, so dass der Setzkopf 11 formschlüssig auf der Oberseite der Blechlage 2 aufliegt. Auf der entgegen gesetzten Unterseite der Blechlage 2 liegen insgesamt vier Laschen auf, von denen die Laschen 15a, 15b und 15c dargestellt sind. Diese Laschen bzw. Auskragungen 15a, 15b und 15c entstehen beim Verpressen des Hohlniets, da die einzelnen, durch die Schlitze 14a und 14b voneinander getrennten Bereiche des Nietschafts 12 nachgeben und sich nach außen ausstülpen. Die Laschen bilden den Schließkopf 13 des Hohlniets 10.

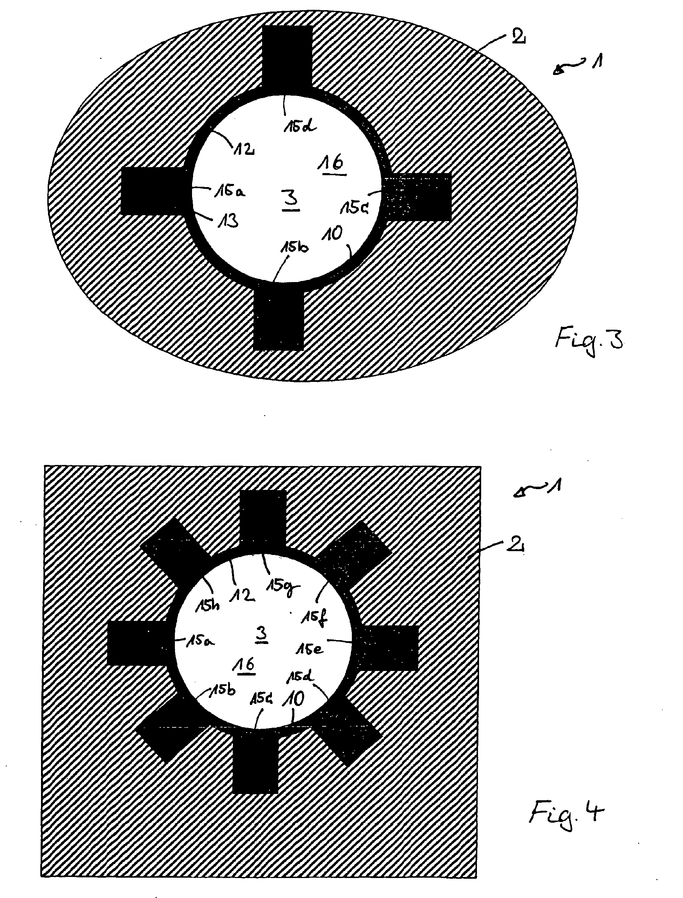

Figur 3 zeigt eine Aufsicht auf die Unterseite einer Blechlage 2 vergleichbar Figur 2. Der Hohlniet 10 weist eine Durchgangsöffnung 16 auf, die im vorliegenden Beispiel konzentrisch ist mit der Durchgangsöffnung 3 der Blechlage 2. Im Querschnitt der Figur 3 sind vier Laschen 15a, 15b, 15c und 15d dargestellt, die ihrerseits formschlüssig an der Unterseite der Blechlage 2 anliegen. Im Vergleich zum Ausführungsbeispiel der vorangehenden beiden Figuren sind hier die Schlitze zwischen den Laschen 15a, 15b, 15c und 15d so gestaltet, dass sie eine wesentlich größere Breite aufweisen. Generell kann die Breite der Schlitze und/oder Laschen nach den Bedürfnissen der jeweiligen Anwendung gewählt werden.

Figur 4 zeigt in Aufsicht auf die Unterseite einer Blechlage 2 ein Hitzeschild, bei dem ein Hohlniet in die Durchgangsöffnung 3 eingebracht wurde, der vergleichbar ausgestaltet ist wie der Hohlniet der Figuren 1 bis 3. Im Unterschied zu dem Hohlniet der Figur 1 besitzt der Nietschaft 12 jedoch insgesamt 8 Schlitze, so dass sich beim Verpressen des Hohlniets 10 acht Laschen 15a bis 15h ausbilden. Generell kann die Anzahl Laschen nach den Bedürfnissen der jeweiligen Anwendung gewählt werden. Vorteilhafterweise werden jedoch mindestens zwei Laschen vorgesehen.

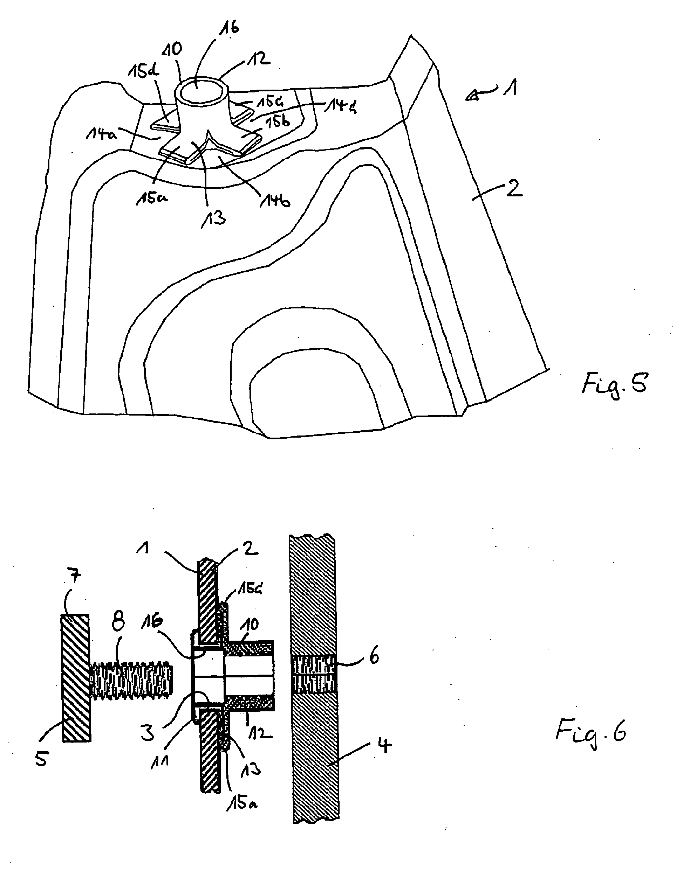

Figur 5 zeigt eine Ansicht eines Ausschnitts eines Hitzeschildes 1 mit einer dreidimensional ausgeformten Blechlage 2. Die Ansicht zeigt die Unterseite des Hitzeschilds 1. Diese Blechlage 2 besitzt eine Durchgangsöffnung, die hier von einem Hohlniet 10 verdeckt wird. Dieser Hohlniet 10 ist wie in Figur 1 ausgebildet und in Figur 5 im verpressten Zustand dargestellt. Er bildet insgesamt vier Laschen 15a bis 15d aus, die für eine formschlüssige Befestigung des Hohlniets auf der Blechlage 2 sorgen. Der Hohlniet 10 weist eine Öffnung 16 auf, die ein Befestigungsmittel aufnehmen kann.

Figur 6 zeigt einen Querschnitt durch eine Anordnung eines erfindungsgemäßen Hitzeschilds 1 an einem Bauteil 4 in Art einer Explosionszeichnung. Dabei ist das Hitzeschild 1 und das diesem benachbarte Bauteil 4 im Querschnitt dargestellt, während eine Schraube 5 als Befestigungsmittel bezüglich ihres Gewindes 8 in Aufsicht dargestellt ist. Die Ausgestaltung des Hitzeschildes 1 mit dem Hohlniet 10 entspricht grundsätzlich der Darstellung der Figuren 1 bis 3. Benachbart zu dem Hitzeschild 1 ist ein Bauteil 4 mit einer Gewindebohrung 6 angeordnet, wobei die Gewindebohrung 6 als Innenansicht dargestellt ist. Die Schraube 5 mit Schraubenkopf 7 und Gewinde 8 wird nun durch die Durchgangsöffnung 16 des Hohlniets 10 geführt und in der Gewindebohrung 6 verschraubt.

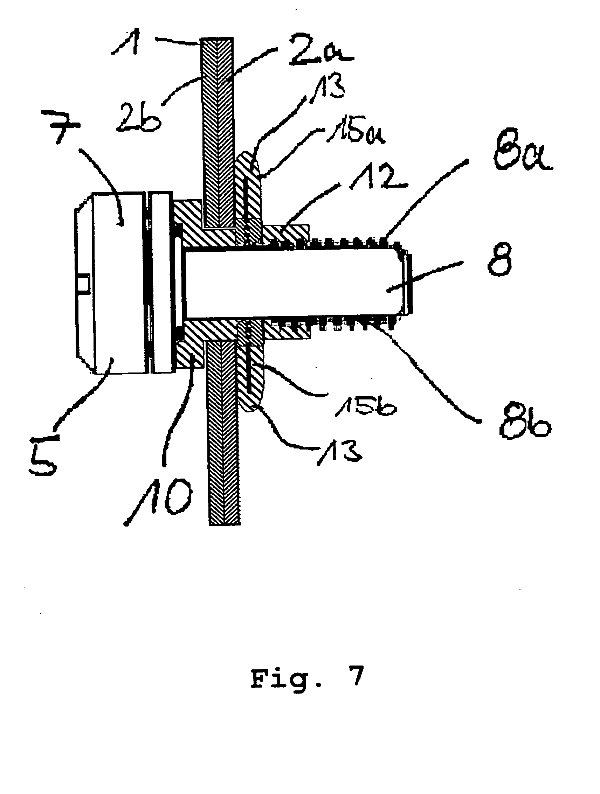

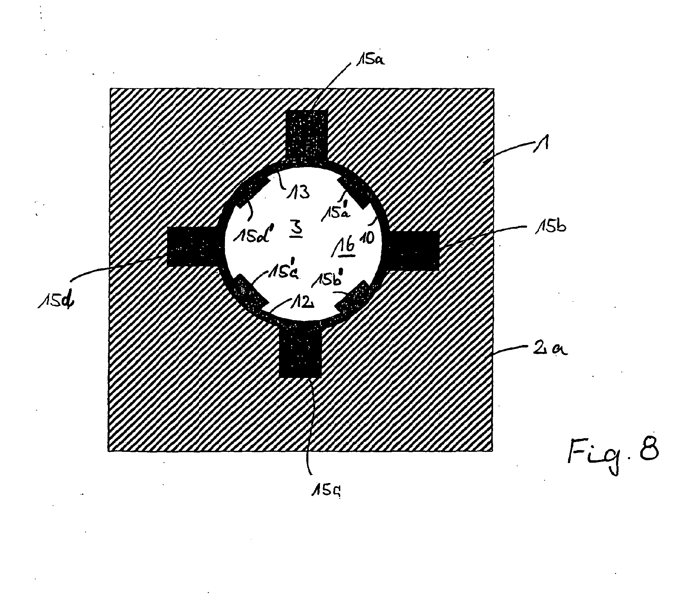

Figur 7 zeigt im Querschnitt ein Hitzeschild 1, das grundsätzlich ähnlich zu demjenigen in Figur 2 ausgebildet ist, das jedoch zwei parallel zueinander angeordnete Blechlagen 2a, 2b aufweist und in dem eine Schraube 5 in verliersicherer, jedoch drehbarer Weise angeordnet ist. Die Schraube 5 mit Schraubenkopf 7 besitzt einen Schraubenschaft 8 mit einem Bereich 8a mit Schraubengewinde und einem zwischen dem Bereich 8a und dem Schraubenkopf 7 angeordneten Bereich 8b, der kein Schraubengewinde aufweist. Im Bereich 8b ist der Durchmesser des Schraubenschaftes kleiner als im Bereich 8a. Wie ergänzend in Figur 8 zu erkennen ist, ist der Hohlniet 10 nunmehr so ausgestaltet, dass sich beim Verpressen des Hohlniets innerhalb der Durchgangsöffnung 3 der Blechlage 2 Laschen 15a bis 15d ausbilden, die nach außen ausgestülpt sind und den Hohlniet 10 in formschlüssiger Weise an der Blechlage 2a festlegen.

Weiterhin bilden sich beim Verpressen des Hohlniets Laschen 15a' bis 15b' aus, die sich in Richtung der Durchgangsöffnungen 3, 16 nach innen ausstülpen. Wird die Schraube 5 vor Verpressen des Hohlniets 10 in die Durchgangsöffnung 16 eingeführt, so greifen nun die Laschen 15a' bis 15d' in den Bereich 8b des Schraubenschaftes 8. Damit ist die Schraube 5 innerhalb der Öffnung 16 in verliersicherer Weise festgelegt, wobei sie jedoch drehbar ist. Dadurch kann das Hitzeschild 1 auf einem weiteren Bauteil in einfacher Weise befestigt werden.

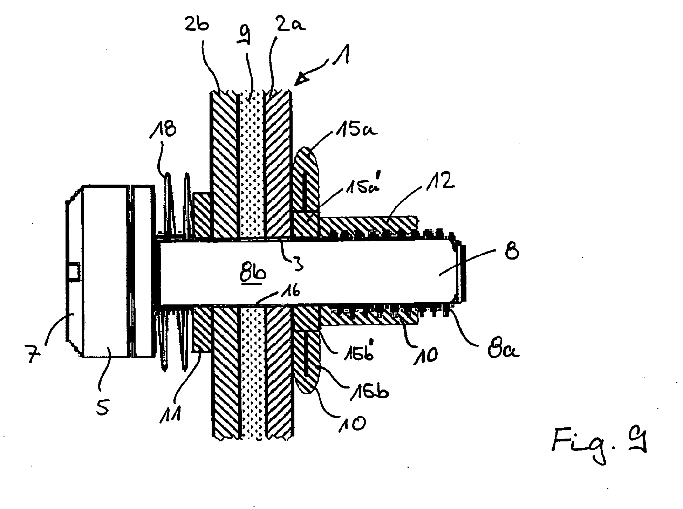

Figur 9 zeigt ein weiteres Hitzeschild 1. Während in den Figuren 7 und 8 das Hitzeschild 1 zweilagig mit unmittelbar benachbarten Blechlagen 2a und 2b ausgestaltet ist, weist in Figur 9 das Hitzeschild 1 nun zwei Blechlagen 2a und 2b auf, die durch eine Zwischenlage 9, beispielsweise aus einem thermisch isolierenden Material, voneinander getrennt sind. Die weitere Ausgestaltung des Hohlniets 10 sowie der Schraube 5 und deren verliersicherer Befestigung in der Durchgangsöffnung 16 des Hohlniets 10 entspricht derjenigen in Figur 7. Zusätzlich ist jedoch die Schraube 5 mit ihrem Schraubenkopf 7 mittels einer Feder 18 auf dem Setzkopf 11 des Hohlniets 10 gelagert. Die Feder 18 spannt die Schraube 5 derart vor, dass sie im unbelasteten Zustand in Richtung des Schraubenkopfes 7 soweit möglich gedrückt gehalten wird. Diese Position bestimmt im Wesentlichen den Überstand des Bereiches 8a über die Laschen 15a`, 15b`, etc.

Wird nun die Schraube 5 in eine Gewindebohrung eingedreht, so wird sie entgegen der Vorspannungsrichtung der Feder 18 durch die Öffnung 16 des Hohlniets 10 geführt und dabei verschraubt.

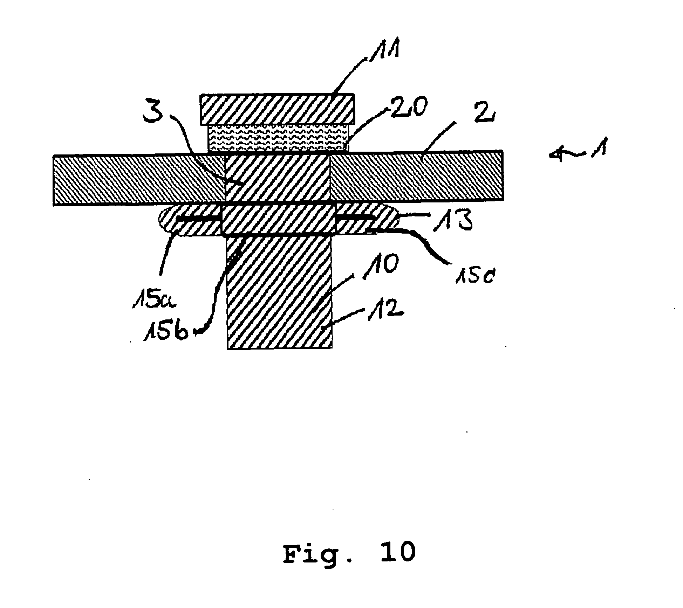

Figur 10 stellt eine Abwandlung des Ausführungsbeispiels aus Figur 2 dar, wobei wiederum der Bereich des Hitzeschilds geschnitten ist, während die oberhalb und unterhalb liegenden Bereiche in Seitenansicht gezeigt sind. Das gezeigte Ausführungsbeispiel unterscheidet sich von dem der Figur 2 dadurch, dass zwischen Setzkopf 11 des Hohlniets 10 und Hitzeschild 1 ein zusätzliches Entkopplungselement in Form eines Drahtkissens 20 angeordnet ist. Dieses Drahtkissen 20 wird vor Einführen des Nietschafts 12 in die Durchgangsöffnung 3 des Hitzeschilds 1 auf den Nietschaft 12 aufgeschoben und wird somit mit dem Hohlniet 10 in die Durchgangsöffnung eingeführt. Vor oder beim Einführen des Niets wird das Drahtkissen 20 zur Anlage am Setzkopf gebracht.

## Patentansprüche

1. Hitzeschild (1) zur Abschirmung heißer Bereiche, beispielsweise eines Verbrennungsmotors, mit mindestens einer metallischen Blechlage (2), wobei die mindestens eine metallische Blechlage (2) mindestens eine Durchgangsöffnung (3) zur Aufnahme eines Befestigungsmittels (5) aufweist, *wobei* mindestens in einer der Durchgangsöffnungen (3) ein Hohlniet (10) als Entkopplungselement zur zumindest teilweisen Entkopplung oder Dämpfung der Übertragung von Schwingungen oder von Wärme von oder zu der mindestens einen Blechlage (2) angeordnet ist und der Hohlniet (10) mit seinem Setzkopf (11) und seinem Schließkopf (13) jeweils formschlüssig benachbart zu oder auf jeweils einer Seite einer der metallischen Blechlagen angeordnet ist,
***dadurch gekennzeichnet, dass***
der Schließkopf (13) einzelne Laschen (15a, 15b, 15c, 15d) aufweist, die über den Rand der Durchgangsöffnung (3) nach außen überstehen.

2. Hitzeschild nach einem der vorhergehenden Ansprüche, **dadurch gekennzeichnet, dass** der Hohlniet (10) einen Nietschaft (12) aufweist, der mindestens zwei, drei, vier oder mehr in Richtung des Nietschafts (12) verlaufende Schlitze (14a, 14b, 14c, 14d) aufweist.

3. Hitzeschild nach einem der vorhergehenden Ansprüche, **dadurch gekennzeichnet, dass** der Nietschaft (12) im Bereich des Durchgangs (16) durch die Durchgangsöffnung (3)kein Gewinde aufweist.

4. Hitzeschild nach einem der vorhergehenden Ansprüche, **dadurch gekennzeichnet, dass** ein Befestigungsmittel (5) in der mindestens einen Durchgangsöffnung (3) angeordnet ist.

5. Hitzeschild nach einem der vorhergehenden Ansprüche, **dadurch gekennzeichnet, dass** das Befestigungsmittel (5) in der mindestens einen Durchgangsöffnung (3) bezüglich einer, mehrerer oder sämtlicher Freiheitsgrade zumindest bereichsweise beweglich, aber in verliersicherer Weise angeordnet ist.

6. Hitzeschild nach einem der vorhergehenden Ansprüche, **dadurch gekennzeichnet, dass** das Befestigungsmittel (5) eine Schraube ist.

7. Hitzeschild nach einem der vorhergehenden Ansprüche, **dadurch gekennzeichnet, dass** das Befestigungselement (5) eine Schraube ist, wobei der Schraubenkopf (7) auf dem oder im Bereich des Umfangsrand der Durchgangsöffnung (3) mittels einer, vorteilhafterweise in Richtung des Schraubenkopfes (7) vorgespannten, Feder (18) gelagert ist.

8. Hitzeschild nach dem vorhergehenden Anspruch, **dadurch gekennzeichnet, dass** die Feder (18) einerseits formschlüssig und/oder stoffschlüssig mit dem Schraubenkopf (7) und andererseits formschlüssig und/oder stoffschlüssig mit der mindestens einen metallischen Blechlage (2) oder dem Hohlniet (10) verbunden ist.

9. Hitzeschild nach einem der beiden vorhergehenden Ansprüche, **dadurch gekennzeichnet, dass** der Schaftdurchmesser der Schraube (5) im Bereich zwischen Gewinde (8) und Kopf (7) kleiner ist als die lichte Weite des Entkopplungselementes (10) in der Durchgangsöffnung (3), und der Gewindedurchmesser der Schraube (5) größer ist als die lichte Weite des Entkopplungselementes (10) in der Durchgangsöffnung (3).

10. Hitzeschild nach einem der vorhergehenden Ansprüche, **dadurch gekennzeichnet, dass** mindestens zwei metallische Blechlagen (2) ein Gehäuse bildend zumindest bereichsweise an ihren Rändern miteinander verbunden sind, wobei das Gehäuse mindestens eine Durchgangsöffnung (3) zur Aufnahme eines Befestigungsmittels (5) aufweist, wobei in der Durchgangsöffnung (3) ein Hohlniet (10) als Entkopplungselement angeordnet ist.

11. Hitzeschild nach dem vorhergehenden Anspruch, **dadurch gekennzeichnet, dass** die Durchgangsöffnung (3) in einem Bereich angeordnet ist, in dem zwischen den mindestens zwei Blechlagen (2) des Gehäuses keine Zwischenlage (9) angeordnet ist.

12. Hitzeschild nach einem der vorhergehenden Ansprüche, **dadurch gekennzeichnet, dass** der Hohlniet ein Blindniet ist.

13. Hitzeschild nach einem der vorhergehenden Ansprüche, **dadurch gekennzeichnet, dass** es eine flächige Form aufweist, insbesondere in zwei Richtungen eine wesentlich größere Ausdehnung aufweist als in eine dritte, auf den zwei Richtungen senkrecht stehende Richtung.

## Claims

1. Heat shield (1) for shielding of hot areas, e.g. of a combustion engine, with at least one metallic sheet layer (2), with the at least one metallic sheet layer (2) comprising at least one passage opening (3) for taking up a fastening means (5), where at least one hollow rived (10) is arranged in the passage opening (3) as a decoupling element for an at least partial decoupling or dampening of the transmission of vibrations or of heat from or to the at least one metal sheet layer (2) and where the hollow rivet (10) with its head (11) and its collapsed shank (13) each are positively arranged adjacent to or on one side of one of the metallic sheet layers, **characterized in that** the collapsed shank (13) comprises individual lugs (151, 15b, 15c, 15d), which protrude outwardly beyond the edge of the passage opening.

2. Heat shield according to one of the preceding claims, **characterized in that** the hollow rivet (10) comprises a rivet shank (12) which rivet shank (12) comprises at least two, three, four or more slits (14a, 14b, 14c, 14d) extending in the direction of the rivet shank (12).

3. Heat shield according to one of the preceding claims, **characterized in that** the shank (12) of the rivet in the area of the passage (16) through the passage hole (3) comprises no thread.

4. Heat shield according to one of the preceding claims, **characterized in that** a fastening means (5) is arranged in the at least one passage opening (3).

5. Heat shield according to one of the preceding claims, **characterized in that** the fastening means (5) is arranged in the at least one passage opening in a loss-preventing manner and moveable at least in sections with respect to at least one, several or all degrees of freedom.

6. Heat shield according to one of the preceding claims, **characterized in that** the fastening means (5) is a screw.

7. Heat shield according to one of the preceding claims, **characterized in that** the fastening means (5) is a screw with the head (7) of the screw being seated on the or in the area of the edge of the passage opening (3) with a spring (13) which is preferably pre-tensioned in the direction of the head (7) of the screw.

8. Heat shield according to one of the preceding claims, **characterized in that** the spring (18) is connected on one side in a positive and/or adhesive manner with the head (7) of the screw, and on the other side in a positive and/or adhesive manner with the at least one metallic sheet layer (2) or with the hollow rivet (10).

9. Heat shield according to one of the preceding claims, **characterized in that** the diameter of the shank of the screw (5) in the area between the thread (8) and the head (7) is smaller than the clear width of the decoupling element (10) in the passage opening (3), and that the diameter of the thread of the screw (5) is larger than the clear width of the decoupling element (10) in the passage opening (3).

10. Heat shield according to one of the preceding claims, **characterized in that** at least two metallic sheet layers (2) are connected to each other at least in sections at their edges and this way form a housing, with the housing comprising at least one passage opening (3) for taking up of a fastening means (5) with a hollow rivet (10) being arranged as a decoupling element in the passage opening (3).

11. Heat shield according to the preceding claim, **characterized in that** the passage opening (3) is arranged in an area, in which no intermediate layers (9) are arranged between the two metal sheets (2) of the housing.

12. Heat shield according to the preceding claim, **characterized in that** the hollow rivet is a blind rivet.

13. Heat shield according to one of the preceding claims **characterized in that** it comprises an extensive shape, in particular a larger extension in two directions than in the third direction with the third direction being orthogonal to the other two directions.

## Revendications

1. Bouclier thermique (1) pour protéger des zones chaudes, par exemple d'un moteur à combustion interne, comportant au moins une couche de tôle (2) métallique, l'au moins une couche de tôle (2) métallique présentant au moins un orifice de passage (3) destiné à recevoir un moyen de fixation (5), au moins un rivet tubulaire (10) en tant qu'élément de découplage étant disposé au moins dans l'un des orifices de passage (3) pour au moins le découplage partiel ou l'amortissement partiel de la transmission des oscillations ou de la chaleur provenant de ou vers l'au moins une couche de tôle (2), et le rivet tubulaire (10) est disposé avec sa tête de pose (11) et sa tête de fermeture (13), respectivement, par complémentarité de forme de manière adjacente à ou sur respectivement un côté de l'une des couches de tôle métalliques,
**caractérisé en ce que** la tête de fermeture (13) présente différentes languettes (15a, 15b, 15c, 15d) qui dépassent vers l'extérieur sur le bord de l'orifice de passage (3).

2. Bouclier thermique selon l'une quelconque des revendications précédentes, **caractérisé en ce que** le rivet tubulaire (10) présente une tige de rivet (12) qui présente au moins deux, trois, quatre ou plusieurs fentes (14a, 14b, 14c, 14c) s'étendant dans le sens de la tige de rivet (12).

3. Bouclier thermique selon l'une quelconque des revendications précédentes, **caractérisé en ce que** la tige de rivet (12) ne présente aucun filet dans la zone du passage (16) à travers l'orifice de passage (3).

4. Bouclier thermique selon l'une quelconque des revendications précédentes, **caractérisé en ce qu'**un moyen de fixation (5) est disposé dans l'au moins un orifice de passage (3).

5. Bouclier thermique selon l'une quelconque des revendications précédentes, **caractérisé en ce que** le moyen de fixation (5) est disposé, de manière mobile au moins par zones, dans l'au moins un orifice de passage (3) concernant un, plusieurs ou tous les degrés de liberté, mais de manière imperdable.

6. Bouclier thermique selon l'une quelconque des revendications précédentes, **caractérisé en ce que** le moyen de fixation (5) est une vis.

7. Bouclier thermique selon l'une quelconque des revendications précédentes, **caractérisé en ce que** le moyen de fixation (5) est une vis, la tête de vis (7) étant posée sur ou dans la zone du bord périphérique de l'orifice de passage (3) au moyen d'un ressort (18) précontraint avantageusement suivant le sens de la tête de vis (7).

8. Bouclier thermique selon l'une quelconque des revendications précédentes, **caractérisé en ce que** le ressort (18) est relié, d'une part, à la tête de vis (7) par complémentarité de forme et/ou par liaison de matière et, d'autre part, à l'au moins une couche de tôle (2) métallique ou au rivet tubulaire (10) par complémentarité de forme et/ou par liaison de matière.

9. Bouclier thermique selon l'une quelconque des deux revendications précédentes, **caractérisé en ce que** le diamètre de la partie lisse de la tige de la vis (5) dans la zone entre le filet (8) et la tête (7) est inférieur à la largeur intérieure de l'élément de découplage (10) dans l'orifice de passage (3), et le diamètre du filet de la vis (5) est supérieur à la largeur intérieure de l'élément de découplage (10) dans l'orifice de passage (3).

10. Bouclier thermique selon l'une quelconque des revendications précédentes, **caractérisé en ce qu'**au moins deux couches de tôle (2) métalliques formant un caisson, sont reliées l'une à l'autre au moins par zones au niveau de leurs bords, le caisson présentant au moins un orifice de passage (3) destiné à recevoir un moyen de fixation (5), un rivet tubulaire (10) en tant qu'élément de découplage étant disposé dans l'orifice de passage (3).

11. Bouclier thermique selon l'une quelconque des revendications précédentes, **caractérisé en ce que** l'orifice de passage (3) est disposé dans une zone dans laquelle aucune couche intermédiaire (9) n'est disposée entre les au moins deux couches de tôle (2) du caisson.

12. Bouclier thermique selon l'une quelconque des revendications précédentes, **caractérisé en ce que** le rivet tubulaire est un rivet aveugle.

13. Bouclier thermique selon l'une quelconque des revendications précédentes, **caractérisé en ce qu'**il présente une forme plate, en particulier, il présente dans deux sens une dimension nettement plus importante que dans un troisième sens perpendiculaire aux deux sens.
